(19) Europäisches Patentamt
European Patent Office
Office européen des brevets

(11) **EP 3 648 612 B1**

(12) **EUROPEAN PATENT SPECIFICATION**

(45) Date of publication and mention
of the grant of the patent:
**09.06.2021 Bulletin 2021/23**

(51) Int Cl.:
***A23D 7/00*** *(2006.01)*      ***A23D 7/01*** *(2006.01)*

(21) Application number: **18719475.8**

(22) Date of filing: **10.04.2018**

(86) International application number:
**PCT/EP2018/059168**

(87) International publication number:
**WO 2018/224203 (13.12.2018 Gazette 2018/50)**

(54) **PROCESS FOR MAKING EDIBLE OIL-CONTINUOUS EMULSIONS**

VERFAHREN ZUR HERSTELLUNG VON ESSBAREN ÖLKONTINUIERLICHEN EMULSIONEN

PROCÉDÉ DE FABRICATION D'ÉMULSIONS À PHASE HUILEUSE CONTINUE COMESTIBLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2017 EP 17174783**

(43) Date of publication of application:
**13.05.2020 Bulletin 2020/20**

(73) Proprietor: **Upfield Europe B.V.
3071 JL Rotterdam (NL)**

(72) Inventors:
 • **VAN MALSSEN, Kees, Frederik
   3133 AT Vlaardingen (NL)**
 • **MEEUSE, Frederik, Michiel
   3133 AT Vlaardingen (NL)**
 • **POTMAN, Ronald, Peter
   3133 AT Vlaardingen (NL)**

(74) Representative: **EP&C
   P.O. Box 3241
   2280 GE Rijswijk (NL)**

(56) References cited:
**WO-A1-2013/171027      WO-A1-2014/044582**

 • **MUNUKLU ET AL: "Particle formation of an edible
   fat (rapeseed 70) using the supercritical melt
   micronization (ScMM) process", THE JOURNAL
   OF SUPERCRITICAL FL, ELSEVIER,
   AMSTERDAM, NL, vol. 40, no. 3, 7 March 2007
   (2007-03-07), pages 433-442, XP005912574, ISSN:
   0896-8446, DOI: 10.1016/J.SUPFLU.2006.07.015**

**Description**

**Field of the invention**

The invention relates to a process for making edible oil-continuous emulsions by mixing slurries of hardstock fat crystals in oil with an aqueous phase to form an emulsion followed by addition of a melted hardstock. More in particular, the oil-continuous emulsions are spreads or margarines.

**Background of the invention**

Edible water-in-oil emulsions, which comprise a continuous fat phase and a dispersed aqueous phase, are well known in the art and include for example margarine.

The fat phase of margarine and similar water-in-oil emulsions is typically a mixture of liquid oil (i.e. fat that is liquid at ambient temperature) and fat which is solid at ambient temperatures. The solid fat, also called structuring fat or hardstock fat, serves to structure the fat phase and helps to stabilize the aqueous phase (e.g. in the form of droplets) by forming a fat crystal network. Ideally the structuring fat has such properties that it melts or dissolves at mouth temperature otherwise the product may have a heavy and/or waxy mouthfeel.

Margarine is generally defined as a composition containing at least 80 wt. % fat and about 20 wt. % aqueous phase. In contrast, (spreadable) emulsions containing less than 80 wt. % fat are generally called spreads. Nowadays the terms margarine and spread are sometimes used interchangeably although in some countries the commercial use of the term margarine is subject to certain regulatory requirements.

In the market place margarine is generally sold as one of three principal types of water-in-oil emulsion:

- hard or stick margarine (also referred to as wrappers);
- (typically softer) tub margarine (typically named "spreads)"; and
- liquid or pourable margarine.

Wrapper margarines and tub margarines are non-pourable and generally contain a higher amount of hardstock fat than liquid or pourable margarines.

The general process for the manufacture of water-in-oil emulsions, using the votator or churn process, encompasses the following steps:

1. Mixing of the liquid oil, the hardstock fat and the water-phase at a temperature at which the hardstock fat is definitely liquid;
2. cooling of the mixture under high shear to induce crystallization of the hardstock fat to create an emulsion;
3. formation of a fat crystal network to stabilize the resulting emulsion and give the product some degree of firmness;
4. modification of the crystal network to produce the desired firmness, confer plasticity and reduce the water droplet size.

Examples of such processes are found in the documents WO2013/171027 and WO2014/044582.

These steps are usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158. A disadvantage of such process is that it requires heating up and cooling the whole formulation, e.g. including all oil and all water. This costs a lot of energy. Melanges containing dairy fat next to vegetable fat as set out above can easily be made with such votator process, in which butter fat is melted and added to the total ingredient mix that is fed to the processing line.

An alternative to the votator or churn process for the manufacture of margarines which is known involves the use of fat powder comprising hardstock fat (i.e. pre-crystallized fat) (WO 2005/014158). The fat powder used in such process is also known as ScMM powder (super critical melt micronisation) or PGSS (particles from gas saturated solutions). Spreads can be made by blending at ambient or colder temperature liquid oil, the fat powder and an aqueous phase. This overcomes having to heat and cool the entire formulation. When using micronized fat powder as fat structuring agent in fat-continuous spreads, generally a fairly fixed ratio of fat powder: oil is required for achieving sufficient structuring, which makes this method less attractive for high-fat products (e.g. 70-85%). Also, a high amount of ScMM fat powder in oil can lead to slurries of very high viscosity, which may be difficult to handle.

A further alternative for making spreads is known e.g. from GB1327511. This reference discloses a process for the preparation of low-calorie spreads by mixing a first liquid (which is at a temperature of at least 28°C) which consists of a fat phase containing crystallisable material with a second liquid (which is at a temperature of at most 8°C) which is substantially free from crystallisable material. At least part of the second liquid is composed of the aqueous phase, and may further contain oils which are liquid at 2°C. The two liquids are fed separately to a high pressure dosing pump, allowing continuous dosing of the liquids.

Spreads and margarines of good quality and stability preferably have a droplet size $D_{3.3}$ being smaller than 10 micron, more preferably smaller than 9 micron, most preferably smaller than 8 micron.

## Summary of the invention

There is a desire for a process that allows the manufacture of fat-continuous emulsions (e.g. spreads) comprising vegetable oil and hardstock, that does not have the disadvantages of votator processing (such as having to heat up and cool the whole formulation). It is also a desire that such method allows production of emulsions high in fat (70-85%) without requiring unduly high levels of micronized fat powder. Simultaneously, such spreads should preferably have a droplet size $D_{3.3}$ being smaller than 10 micron, more preferably smaller than 9 micron, most preferably smaller than 8 micron.

It has now been found that the above objectives may be achieved, at least in part, by a process for making an edible oil-continuous emulsion, which emulsion comprises 15-65% by weight on the total emulsion of an aqueous phase and 35-85% by weight on the total emulsion of a fat phase, said fat phase comprising a first hardstock fat, a second hardstock fat, and edible oil, said process comprising the steps of:

a. preparing a dispersion comprising edible oil and fat crystals, by mixing 65% to 98% by weight on the dispersion of edible oil with 2 to 35% by weight on the dispersion of first hardstock fat, wherein the fat crystals in the dispersion have an average crystal thickness of less than 50 nm at temperature of between 15° and 20°C as measured with small angle x-ray scattering;
b. providing an aqueous phase at a temperature from 0 to 25°C;
c. mixing the dispersion prepared under a. with the aqueous phase prepared under b. to form an emulsion;
d. mixing the emulsion prepared under c. with 1-35 % by weight based on the total fat phase of said second hardstock fat, which second hardstock fat is liquid and at a temperature of between 30 and 80°C.

## Detailed description of the invention

The term "hardstock" refers to edible fat that is solid at room temperature. The hardstock may comprise two or more different hard fats. This applies to both the first and the second hardstock. The first hardstock and the second hardstock may be the same or may be different. Room temperature in this respect is a temperature of 20°C.

The measurement of the average crystal thickness L of the fat crystals in the dispersion in step a. using small angle x-ray scattering is herein derived from the first order long spacing x-ray diffraction peak and determined by the Scherrer formula:

$$L = \frac{K\lambda}{\beta cos\,\theta}$$

where θ is the Bragg angle, λ is the X-ray diffraction wavelength in nanometer, β is the line width (FWHM) of the peak in radians corrected for instrumental broadening and K is a dimensionless shape factor. For fat crystals the value 0.9 is used for K.

The solid fat content (SFC) herein is expressed as N-value, as defined in Fette, Seifen Anstrichmittel 80 180-186 (1978). The stabilization profile applied is heating to a temperature of 80°C, keeping the oil for at least 10 minutes at 60°C or higher, keeping the oil/fat for 1 hour at 0°C and then 30 minutes at the measuring temperature.

The dispersion of fat crystals in oil as mentioned under a. above may be manufactured using a variety of processes. The present invention encompasses three alternatives for such.

One way of manufacturing the slurry of step a. above is a process wherein the dispersion of step a. is obtained by mixing crystallised particles of the first hardstock fat with the edible oil, which edible oil is at a temperature of below 30°C. The crystallised particles of such first hardstock fat are preferably micronized fat particles prepared by supercritical melt micronisation of the first hardstock fat. The process of making fat powder or fat particles by supercritical melt micronisation is also known as the PGSS process; particles from gas-saturated solutions. This process is set out in more detail in: "Particle formation of ductile materials using the PGSS technology with supercritical carbon dioxide", P.Münüklü, Ph.D.Thesis, Delft University of Technology, 16-12-2005, Chapter 4, pp. 41-51.).

A second way of manufacturing the slurry of step a. is a process wherein the dispersion of step a. is obtained by mixing the first hardstock fat which is melted and at a temperature of between 30°C and 80°C with the edible oil at a temperature of between -10 and 25°C under shear, wherein the amounts and temperatures are selected such that the temperature of the dispersion is below the melting point of the first hardstock fat. The temperature of the first hardstock which is melted is preferably as low as possible, and depends on the melting point of the hardstock. Thus, RP70 (rapeseed oil hardened to a melting point of about 70°C will require a temperature of e.g. 70-80°C, whereas palm oil fractions having a melting point between 30 and 35°C are preferred to be used at a temperature of e.g. 35-45°C. The reason is that the cooling capacity of the oil needs to be sufficient. Likewise, with high melting hardstocks the amount of hardstock will be low relative to the oil, whereas with low melting hardstocks larger amounts of such are possible.

A third way of providing the dispersion of step a. is obtained by providing a mixture of the first hardstock fat and the edible oil at a temperature so that this complete mixture is liquid, followed by cooling down this mixture to a temperature of between 0 and 25°C, preferably such cooling down is in a scraped surface heat exchanger.

The second hardstock is added in liquid form. Thus, the temperature of the melted hardstock should be such that most of the second hardstock is melted, but preferably be as low as possible, as e.g. a hardstock at 90°C would require too much cooling capacity from the emulsion to which it is added. Thus, in the present invention, for hardstock fats as are commonly used e.g. in spread manufacture, it is then usually preferred to that the temperature of the melted hardstock in step d. is between 30°C and 55°C, more preferably between 35°C and 50°C, even more preferably between 35°C and 45°C. In the above, it is stated that the second hardstock, when added in step d. is liquid, and thus that most of the second hardstock is melted. The skilled person will understand that a minor amount of the second hardstock may be still in crystal form, as long as the second hardstock is easily pumpable and can be mixed with the emulsion. "A minor amount" is herein to be understood as less than 20% by weight of the second hardstock being in crystal form, preferably less than 10%, more preferably less than 5%.

In the process according to the invention, it is preferred that after the addition of the second hardstock fat of step d. the mixture so-obtained is subjected to shear in such a way that the temperature of the mixture exiting this shear device is below 35°C, more preferably below 30°C, even more preferably below 25°C, in order to prevent too many hardstock fat crystals from being melted or dissolved in the oil.

The process according to the invention allows for hardstocks of a different composition (for the first and second hardstock), which widens the possibilities for the manufacturer for certain product properties (thus, for such possibilities the first and the second hardstock fat are of different composition) It may be preferred however, e.g. for reasons of simplicity, that the first and the second hardstock fat are of the same composition. The process according to the invention also allows the inclusion of plant sterols and plant stanols (including the esters of such sterols and stanols) as part of e.g. the second hardstock. This may be a convenient way to include such components. Thus, It may be preferred that the second hardstock comprises 10 to 100% by weight on the second hardstock of sterols, stanols, or esters of sterols or stanols.

As to the types of hardstock that are preferred for the present invention, the first hardstock fat and the second hardstock fat have a solids content of at least 50% at 20° C and a solids content of at least 25% at 30° C.

The process according to the invention is suited for a wide range of fat levels. However, the invention is in particular suitable for manufacturing edible emulsions having high levels of fat. Thus, it is preferred in the present invention that the emulsion which is made by the present process comprises 20-55% by weight on the total emulsion of an aqueous phase and 45-80% by weight on the total emulsion of a fat phase.

For success in the process steps c. and d. it is preferred that the dispersion produced by step a. contains sufficient fat crystals, in order e.g. to stabilize the emulsion. Thus, it is preferred in the presently claimed process that the dispersion prepared under a. and prior to mixing step c. has an amount of solids (i.e. fat crystals) of between 1 and 25%.

In the process according to the invention, the mixing step c. to obtain the emulsion can be effected by any suitable mixing known to the skilled person for obtaining edible oil-continuous emulsions, yet sufficient care should be taken that this mixing operation does not raise the temperature of the product unduly, as such may result in melting of all or part of the fat crystals of the first hardstock fat (and consequently a loss of stabilizing power). Thus, preferably a mixing operation is chosen such that the mixing step c. is effected by a shear device which produces an emulsion with a water droplet size $D_{3.3}$ of between 1 and 20 micron, preferably between 2 and 15 micron, more preferably between 2 and 10 micron, yet wherein the temperature of the emulsion after said mixing step is below 28°C. Typically, suitable mixing steps will require sufficient shear in combination with a short residence time. An example of mixing equipment which is suitable for this step c. in the present process is a fluid division mixer (FDM) as marketed by Maelstrom, similar as in WO 02/38263, with a concentric rotor-stator system with e.g. 4 rows of cavities in both rotor and stator. The cavities in the rotor and stator in such equipment are preferably spherical segments which are open on both vertical and horizontal faces. The rotor and stator are based on a stepped conical form so that the diameter of the cone increases from inlet to outlet (e.g. from about 50 up to 150 mm). Such equipment is commercially available from Maelstrom (http://www.maelstrom-apt.com/product-dc50/).

## EXAMPLES

Methods

### Water droplet size distribution of W/O emulsions

The normal terminology for Nuclear Magnetic Resonance (NMR) is used throughout this method. On the basis of this method the parameters $D_{3,3}$ and $\exp(\sigma)$ of a lognormal water droplet size distribution can be determined. The $D_{3,3}$ is the volume weighted mean droplet diameter (in microns, in the present case) and $e^{\sigma}$ (e-sigma) is the standard deviation of the logarithm of the droplet diameter.

The NMR signal (echo height) of the protons of the water in a water -in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure -which uses the log-normal droplet size distribution - the parameters of the water droplet size distribution $D_{3,3}$ (volume weighed geometric mean diameter) and $\sigma$ (distribution width) are calculated.

A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

### Stevens value

Stevens values indicates a products hardness or firmness. The Stevens value was measured with a Stevens penetrometer (Brookfield LFRA Texture Analyser (LFRA 1500), ex Brookfield Engineering Labs, UK) equipped with a stainless steel probe with a diameter of 6.35 mm and operated in "normal" mode. Temperature of the sample: 5°C (referred to as S5, unless measured at a different temperature, e.g. 20°C for example 3, referred to as S20). The probe is pushed into the product at a speed of 2 mm/s, a trigger force of 5 gram from a distance of 10 mm. The force required is read from the digital display and is expressed in grams. Unless otherwise noted, samples are in a standard 250ml product tub (120 * 80 * 45 mm (LWH))

### Average Crystal Thickness (ACT) measurement in fat slurry

Average Crystal Thickness (ACT) can be determined by the use of Small Angle X-ray Scattering (SAXS). The Full Width at Half Maximum (FWHM) of the first order diffraction line of the fat crystals is used. The corresponding SAXS area is typically between 7.0 and 3.5 nm (1.3 - 2.5° $2\theta$ CuK$\alpha$ radiation) depending on fat type and polymorph. The average crystallite thickness L in nm is calculated using the Scherrer formula:

$$ L = \frac{K\lambda}{\beta cos\ \theta} $$

where $\theta$ and $\lambda$ are the Bragg angle and X-ray diffraction wavelength in nanometer, respectively. $\beta$ is the line breadth (FWHM) intensity of the peak in radians corrected for instrumental broadening. In the measurement set-up K was 0.9 [1], A (CuK$\alpha$) was 0.154184. For fat systems $\theta$ is around 1.1°, so cos $\theta$ is 1 and can be neglected.

### D8-Discover diffractometer (SAXS configuration)

A sample of fat slurry is taken from production and measured within 30 minutes, while the temperature is controlled not to exceed 20°C (in reality the samples were at a temperature of between 15 and 20°C. The SAXS pattern of the slurry is measured on a Bruker D8 Discover X-ray powder diffractometer with GADDS (General Area Detector Diffraction System) in a $\theta/\ \theta$ configuration. A copper anode is used, and the K$\alpha$ radiation with wavelength ($\lambda$) 0.15418 nm is selected.

By positioning the X-ray source and the 2D-detector at 0° $2\theta$, transmission measurements are realised. The samples are measured at 5°C by using a Linkam temperature stage and a measurement time of 400s. Samples are 2.0 mm thick and enclosed by X-ray Mylar film in the sample holder of this stage. The Linkam stage is positioned on the x,y,z table of the D8 Discover and the liquid nitrogen pump and heating module are placed in the cabinet during measurements. The adjusted temperature is checked by a thermocouple.

The used instrumental SAXS parameters are shown in table 1.

Table 1: D8 Discover instrumental parameters (SAXS) for fat powder measurements

|  | 2θ (1 - 10°) |
| --- | --- |
| θ1 | 0.000 |
| θ2 | 0.000 |
| X-ray generator (kV / μA) | 50 / 1000 |
| Time (sec) | 200 |
| Collimator (mm) | 1.0 |
| Detector distance (cm) | 32.5 |
| Tube Anode | Cu |

One dimensional X-ray diffraction patterns are determined from the 2D images using the GADDS (version 1.28) software. The obtained X-ray diffraction patterns are imported in the Bruker EVA software (version 12.0) and the Full Width at Half Maximum (FWHM) is determined.

[1] N.C. Acevedo and A.G. Marangoni, Nanostructured Fat Crystal systems, Review of Food science and Technology 6(1), November 2014.

Example 1

Four slurries of fat crystals in liquid oil were prepared having the recipe as in Table 2

Table 2: composition of slurries examples 1A-1D.

| Component | Amount (wt % on total) | | | |
| --- | --- | --- | --- | --- |
|  | Slurry A | Slurry B | Slurry C | Slurry D |
| Soy bean oil | 88.0 | 79.5 | 78 |  |
| Sunflower oil |  |  |  | 87.5 |
| Palm kernel oil |  | 10.0 | 10 |  |
| Sunflower lecithin |  | 0.5 | 0.5 |  |
| Emulsifier* |  |  | 0.5 | 0.5 |
| erES48 fat powder** | 12.0 | 10.0 |  | 12 |
| Liquid erES48 fat** |  |  | 11 |  |
| Total | 100 | 100 | 100 | 100 |

*) The emulsifier is a mixture of mono- and diglycerides of palmitic and stearic acid, sold as Dimodan HP
**) erES48 and inES48 are enzymatically resp. chemically interesterified fat blends of a mixture of 65% dry fractionated palm oil stearin with an Iodine Value of 14 and 35% palm kernel oil.

The liquid erES48 is at a temperature of approximately 75° C
The fat powder was obtained using a supercritical melt micronisation process similar to the process described in Particle formation of ductile materials using the PGSS technology with supercritical carbon dioxide, P.Münüklü, Ph.D.Thesis, Delft University of Technology, 16-12-2005, Chapter 4, pp. 41-51.).
For Slurry A the fat powder was made as described above, with a fat:$CO_2$ ratio of 75:40. A jacketed bench top bowl mixer (brand Stephan) was precooled by flowing 10° C water through the double wall for at least 12 minutes. Then the bowl was filled with 120 g of fat powder, to which 880 g of soy bean oil is added. After this, the lid is closed and pressure is reduced to below 100 mbar. The slurry is mixed for 50 minutes. After this, samples are taken to measure Average Crystal Thickness.

For Slurry B, a 200 L double walled steel tank with a recirculation pipe (from bottom to top, with a high shear pump for transport and a high shear disc stirrer in the tank is filled with 71.4 kg soy bean oil of approximately 10° C, in which 9 kg palm kernel oil has been dissolved. 450 gram of lecithin is added. The tank is put under mild vacuum (< 100 mbar). Whilst the oil is recirculated, the 9 kg of powdered erES48 fat is sucked in through a funnel mounted in the recirculation loop and dispersed first by the high shear pump and further by the high shear disc and the recirculation.

Air is continuously removed to keep the pressure low. Recirculation is continued for approximately 15 minutes. Temperature is kept below 20° C by flowing 15° C water through the double wall. After about 15 minutes, the vacuum is released and samples are taken to measure the average crystal thickness ACT.

Slurry C is produced using the same equipment as for Slurry B, with soy bean oil/palm kernel mixture at 5° C; sunflower lecithin and emulsifier dissolved in the oil. The erES48 is added in liquid form at 75° C through the funnel in the recirculation loop. Samples are taken to measure Average Crystal Thickness.

Slurry D is produced like Slurry B, with sunflower oil in which the emulsifier has been dissolved.

Results

All example slurries are smooth, white slurries that flow freely. The measured average crystal thickness is listed in table 3 (slurry 1D was not measured).

| Table 3. Average Crystal thickness of fat in oil slurry | |
|---|---|
| Example | ACT (nm) |
| Slurry A | 44.4 |
| Slurry B | 41.4 |
| Slurry C | 49.7 |

Example 2

A 60% fat spread with the composition as described in table 4. Two examples were made (lab scale processing) according to the present invention (same total level of hardstock, different proportions hardstock in slurry and added after making the emulsion). A control was made with no hardstock in the oil (so no slurry, just oil) but all hardstock added after the emulsion (but the same total amount of hardstock).

| Table 4. Composition for example 2 | | | 2a | 2b | control |
|---|---|---|---|---|---|
| Water phase | | Water | 39.9 | 39.9 | 39.9 |
| | | Salt | 0.1 | 0.1 | 0.1 |
| Fat phase | Fat Slurry | inES48 powder | 5.9 | 3.9 | 0 |
| | | Sunflower oil | 42.7 | 42.7 | 42.7 |
| | | Emulsifier* | 0.5 | 0.5 | 0.5 |
| | Hot hardstock | inES48 liquid | 10.9 | 12.9 | 16.8 |
| Total | | | 100 | 100 | 100 |
| *) The emulsifier is a mixture of mono- and diglycerides of palmitic and stearic acid, sold as Dimodan HP | | | | | |

With a total product flow of 15 kg/h a 60% fat spread was produced. In the first step a dispersion (DL) of 12% (5.9 parts powder on a total of 49.1 fat (42.7+5.9+0.5) example 2a) or 8% (3.9 parts on a total of 47.1 fat (42.7+3.9+0.5) example 2b) solids was produced as described in example 1d. After preparation the slurry was cooled to 13-16° C. This slurry was mixed with water of 4° C in a 75 ml C-unit, 2200 RPM, to form an emulsion. To this emulsion additional hot (70° C), liquid inES48 was added through a Y-piece immediately following the first unit to come to the final composition and immediately mixed in a second pin stirrer (400 ml C-unit, 600 RPM). As a control a solids free oil phase was emulsified with water and all hardstock was added in between the 2 pin stirrers.

Samples were taken after the second pin stirrer and stored at 5° C.

Results.

After 3 days storage at 5° C the products had the characteristics as set out in table 5.

| Table 5: results examples 2a, 2b and control. Droplet size and Stevens hardness after 3 days storage at 5° C | | | |
|---|---|---|---|
| | 12%DL (2a) | 8%DL (2b) | Control |
| $D_{3.3}$ | 4.9 | 5.75 | 12.8 |
| e-sigma | 1.9 | 1.92 | 2.21 |
| Stevens | 200 | 270 | 340 |

Example 3

A 60% fat spread with the composition as described in table 6. Two examples were made according to the present invention, which differed in the type of hardstock fat used as the hardstock fat added as liquid after the emulsion is formed. Two controls were also made, with no hardstock in the oil (so no slurry, just oil) but all hardstock added after the emulsion (but the same total amount of hardstock).

| Table 6. Composition for example 3 | | | 3a | 3b | Control1 | Control2 |
|---|---|---|---|---|---|---|
| Water phase | | Water | 39.9 | 39.9 | 39.9 | 39.9 |
| | | Salt | 0.1 | 0.1 | 0.1 | 0.1 |
| Fat phase | Fat Slurry | inES48 powder | 1.6 | 1.6 | - | - |
| | | Rapeseed oil | 39.9 | 39.9 | 39.9 | 39.9 |
| | | Emulsifier* | 0.5 | 0.5 | 0.5 | 0.5 |
| | Hot hardstock | dfPOs53** liq. | | 18.0 | | 19.6 |
| | | inES48 liquid | 18.0 | | 19.6 | |
| Speed C-unit 2 | | | 500 | 250 | 750 | 750 |
| Total | | | 100 | 100 | 100 | 100 |
| *) The emulsifier is a mixture of mono- and diglycerides of palmitic and stearic acid, sold as Dimodan HP **) dfPOs53 = double fractionated palm oil stearine with a melting point of 53° C | | | | | | |

With a total product flow of 50 kg/h a 60% fat spread was produced. In the first step a dispersion of 2.7% (example 3a, 3b) inES48 fat solids in rapeseed oil was produced as described in example 1d. After preparation the slurry was cooled to 13-16° C. This slurry was mixed with water of 4° C in a fluid division mixer (FDM; 1000 rpm) as marketed by Maelstrom, similar as in WO 02/38263, with a concentric rotor-stator system with 4 rows of cavities in both rotor and stator, with a total volume of 0.083 liter. The cavities in the rotor and stator were spherical segments which are open on both vertical and horizontal faces. The rotor and stator are based on a stepped conical form so that the diameter of the cone increases from inlet to outlet (about 50 up to 150 mm). The mixer is commercially available from Maelstrom (http://www.maelstrom-apt.com/product-dc50/). To the emulsion so prepared additional liquid hardstock of approximately 65° C (3a: inES48; 3b: dfPOs53) was added to come to the final composition. After addition of the liquid hardstock, the product was mixed in a pin stirrer (1.5 liter C-unit, RPM in table 6). For each of the formulations in this example the speed of this second C-unit was optimised to get a stable product with the smallest possible droplet size, which resulted in speeds as in table 6. As controls a solids free oil phase was emulsified with water and all hardstock was added in between the two mixing units.
Samples were taken after the second pin stirrer and stored at 5° C.

Results.

After 7 days storage at 5° C the products had the characteristics as set out in table 7.

| Table 7: results examples 3a, 3c, and controls. Droplet size and Stevens hardness after 7 days storage at 5° C | | | | |
|---|---|---|---|---|
| | seed+inES48 (3a) | Seed+dfPOs53 (3b) | Control 1 inES48 | Control 2 dfPOs53 |
| $D_{3.3}$ | 5.59 | 5.49 | 9.60 | 9.10 |
| e-sigma | 1.89 | 1.62 | 2.07 | 1.93 |
| Stevens | 437 | 356 | 346 | 197 |

This example shows that even after process optimization for smallest droplet size, the droplets in the process according to the present invention are smaller than the droplets by the control-process.

Example 4

Two spreads were prepared, one with 40% fat and one with 60% fat. These spreads had the composition as described in table 8 Two examples were made according to the present invention, which differed in the total fat level. One control was also made, with no hardstock in the oil (so no slurry, just oil) but all hardstock added after the emulsion (but the same total amount of hardstock).

| Table 8. Composition for example 4 | | | 4a | 4b | Control |
|---|---|---|---|---|---|
| Water phase | | Water | 39.9 | 59.9 | 39.6 |
| | | Salt | 0.1 | 0.1 | 0.1 |
| Fat phase | Fat Slurry | inES48 powder | 2.4 | 1.6 | |
| | | Rapeseed oil | 39.1 | 26.0 | 38.5 |
| | | Emulsifier* | 0.5 | 0.4 | 0.5 |
| | Hot hardstock | dfPOs53** liq. | 18.0 | 12.0 | 21.3 |
| Total | | | 100 | 100 | 100 |
| *) The emulsifier is a mixture of mono- and diglycerides of palmitic and stearic acid, sold as Dimodan HP **) dfPOs53 = double fractionated palm oil stearine with a melting point of 53° C | | | | | |

With a total product flow of 100~150 kg/h a 40% and a 60% fat spread were produced. In the first step a dispersion of 4.0% (example 4a, 4b) inES48 fat solids in rapeseed oil was produced as described in example 1d. After preparation the slurry was cooled to about 13-16° C. This slurry was mixed with a smaller (example 4a) or larger (example 4b) amount of water of 4° C in a fluid division mixer (FDM; 1750 rpm) as marketed by Maelstrom, similar as in WO 02/38263, with a concentric rotor-stator system with 4 rows of cavities in both rotor and stator, with a total volume of 0.083 liter. The cavities in the rotor and stator were spherical segments which are open on both vertical and horizontal faces. The rotor and stator are based on a stepped conical form so that the diameter of the cone increases from inlet to outlet (about 50 up to 150 mm). The mixer is commercially available from Maelstrom (http://www.maelstrom-apt.com/product-dc50/). To the emulsion so prepared additional liquid dfPOs53 of approximately 65° was added to come to the final composition. After addition of the liquid hardstock, the product was mixed in a pin stirrer (0.5 liter C-unit, 1000 rpm). As control a solids free oil phase was emulsified with water and all hardstock was added in between the two mixing units to create a 60% fat product.
Samples were taken after the second pin stirrer and stored at 5° C.

Results.

After 7 days storage at 5° C the products had the characteristics as in table 9.

| Table 9: results examples 4a, 4b and control. Droplet size and Stevens hardness after 7 days storage at 5° C | | | |
|---|---|---|---|
| | 60% fat spread (4a) | 40% fat spread (4b) | Control 60% fat spread |
| $D_{3.3}$ | 3.99 | 5.0 | 10.70 |

(continued)

| Table 9: results examples 4a, 4b and control. Droplet size and Stevens hardness after 7 days storage at 5° C | | | |
|---|---|---|---|
| | 60% fat spread (4a) | 40% fat spread (4b) | Control 60% fat spread |
| e-sigma | 1.90 | 2.08 | 2.20 |
| Stevens | 404 | 29.3 | 668 |

Example 5

A 60% palm oil based fat spread with the composition as described in table 10

| Table 10. Composition for example 5 | | | | | |
|---|---|---|---|---|---|
| | | | 5a | 5b | 5c |
| | | Speed C unit 1 (rpm) | 1250 | 1500 | 1500 |
| | | Speed C-unit 2 (rpm) | 500 | 500 | 1000 |
| Water phase | | Water | 39.9 | 39.9 | 39.9 |
| | | Salt | 0.1 | 0.1 | 0.1 |
| Fat phase | Fat Slurry | PO powder | 1.3 | 2.0 | 1.7 |
| | | Rapeseed oil | 31.0 | 48.7 | 40.0 |
| | | Emulsifier* | 0.3 | 0.3 | 0.3 |
| | Hot hardstock | PO liq. | 27.4 | 9.0 | 18.0 |
| Total | | | 100 | 100 | 100 |
| *) The emulsifier is a mixture of mono- and diglycerides of palmitic and stearic acid, sold as Dimodan HP | | | | | |

In a first step, fat powder was produced from straight (RBD) palm oil, using the procedure as described for powder production in example 1. A dispersion of 4% of this palm oil powder in 96% rapeseed oil, containing the emulsifier, was made as described in example 1d.

The fat slurry was mixed with a cold water phase (4° C) and emulsified in a 1.5 liter pin stirrer (C-unit, see table for rpm). Immediately after this first pin stirrer, the warm (45° C) liquid palm oil is added and the whole is further mixed in a second pin stirrer (0.5 L C-unit, see table for rpm). Product is made with a total product flow of approximately 50 kg/h. Example 5a has a higher level of hardstock, to produce a firm spread; example 5b has a low level of hardstock to produce a soft spread and example 5c has an intermediate hardstock level to produce a multipurpose spread.

Samples were taken after the second pin stirrer and stored at 5° C.

Results.

After 7 days storage at 5° C the products had the characteristics as in table 11.

| | Table 11. Palm based 60% fat spread After 1 week at 5° C storage | | |
|---|---|---|---|
| | 5a | 5b | 5c |
| $D_{3.3}$ | 8.1 | 4.25 | 3.56 |
| e-sigma | 2.8 | 1.68 | 1.79 |
| Stevens | 560 | 67 | 258 |

**Claims**

1. A process for making an edible oil-continuous emulsion, which emulsion comprises 15-65% by weight on the total emulsion of an aqueous phase and 35-85% by weight on the total emulsion of a fat phase, said fat phase comprising a first hardstock fat, a second hardstock fat, and edible oil, said process comprising the steps of:

   a) preparing a dispersion comprising edible oil and fat crystals, by mixing 65% to 98% by weight on the dispersion of edible oil with 2 to 35% by weight on the dispersion of first hardstock fat, wherein the fat crystals in the dispersion have an average crystal thickness of less than 50 nm at temperature of between 15° and 20°C as measured with small angle x-ray scattering;
   b) providing an aqueous phase at a temperature from 0 to 25°C;
   c) mixing the dispersion prepared under a. with the aqueous phase prepared under b. to form an emulsion;
   d) mixing the emulsion prepared under c. with 1-35% by weight based on the total fat phase of said second hardstock fat, which second hardstock fat is liquid and at a temperature of between 30 and 80°C.

2. Process according to claim 1, wherein the dispersion of step a. is obtained by mixing crystallised particles of the first hardstock fat with the edible oil, which edible oil is at a temperature of below 30°C.

3. Process according to claim 2, wherein the crystallised particles of the first hardstock fat are micronized fat particles prepared by supercritical melt micronisation of the first hardstock fat.

4. Process according to claim 1, wherein the dispersion of step a. is obtained by mixing the first hardstock fat which is melted and at a temperature of between 30°C and 80°C with the edible oil at a temperature of between -10 and 25°C under shear, wherein the amounts and temperatures are selected such that the temperature of the dispersion is below the melting point of the first hardstock fat.

5. Process according to claim 1, wherein the dispersion of step a. is obtained by providing a mixture of the first hardstock fat and the edible oil at a temperature so that this complete mixture is liquid, followed by cooling down this mixture to a temperature of between 0 and 25°C, preferably such cooling down is in a scraped surface heat exchanger.

6. Process according to any of the preceding claims, wherein after the addition of the second hardstock fat of step d. the mixture so-obtained is subjected to shear in such a way that the temperature of the mixture exiting this shear device is below 35°C.

7. Process according to any of claims 1 to 5, wherein the first and the second hardstock fat are of the same composition.

8. Process according to any of claims 1 to 5, wherein the first and the second hardstock fat are of different composition.

9. Process according to any of the preceding claims, wherein the second hardstock comprises 10 to 100% by weight on the second hardstock of sterols, stanols, or esters of sterols or stanols.

10. Process according to any of the preceding claims, wherein the first hardstock fat and the second hardstock fat have at least 50% solids at 20° C and at least 25% solids at 30° C.

11. Process according to any of the preceding claims, wherein the emulsion comprises 20-55% by weight on the total emulsion of an aqueous phase and 45-80% by weight on the total emulsion of a fat phase.

12. Process according to any of the preceding claims, wherein the dispersion prepared under a. and prior to mixing step c. has an amount of solids of between 1 and 25%.

13. Process according to any of the preceding claims, wherein the mixing step c. is effected by a shear device which produces an emulsion with a water droplet size $D_{3.3}$ of between 1 and 20 micron, preferably between 2 and 15 micron, more preferably between 2 and 10 micron, and wherein the temperature of the emulsion after said mixing step is below 28°C.

**Patentansprüche**

1. Verfahren zur Herstellung einer essbare ölkontinuierlichen Emulsion, welche Emulsion 15-65 Gewichtsprozent der gesamten Emulsion einer wässrigen Phase und 35-85 Gewichtsprozent der gesamten Emulsion einer Fettphase umfasst, wobei die Fettphase ein erstes Hardstockfett, ein zweites Hardstockfett und essbares Öl umfasst, wobei der Prozess die Schritte umfasst zum:

   a) Zubereiten einer Dispersion, die essbares Öl und Fettkristalle umfasst, durch Mischen von 65 bis 98 Gewichtsprozent der Dispersion von essbarem Öl mit 2 bis 35 Gewichtsprozent der Dispersion von erstem Hardstockfett, wobei die Fettkristalle in der Dispersion eine durchschnittliche Kristalldicke von weniger als 50 nm bei Temperatur zwischen 15° und 20°C aufweisen, gemessen mit Kleinwinkelstreuung von Röntgenstrahlen;
   b) Zubereiten einer wässrigen Phase bei einer Temperatur von 0 bis 25°C;
   c) Mischen der in a. zubereiteten Dispersion mit der in b. zubereiteten wässrigen Phase zur Bildung einer Emulsion;
   d) Mischen der in c. zubereiteten Emulsion mit 1-35 Gewichtsprozent basierend auf der gesamten Fettphase des zweiten Hardstockfetts, wobei das zweite Hardstockfett Flüssigkeit und bei einer Temperatur zwischen 30 und 80°C ist.

2. Verfahren nach Anspruch 1, wobei die Dispersion von Schritt a. durch Mischen kristallisierter Partikel des ersten Hardstockfetts mit dem essbaren Öl erhalten wird, welches essbare Öl bei einer Temperatur unter 30°C ist.

3. Verfahren nach Anspruch 2, wobei die kristallisierten Partikel des ersten Hardstockfetts mikronisierte Fettpartikel sind, die durch superkritische Schmelzmikronisierung des ersten Hardstockfetts zubereitet werden.

4. Verfahren nach Anspruch 1, wobei die Dispersion von Schritt a. durch Mischen des ersten Hardstockfetts, das geschmolzen und bei einer Temperatur zwischen 30°C und 80°C ist, mit dem essbaren Öl bei einer Temperatur zwischen -10 und 25°C unter Scheren erhalten wird, wobei die Mengen und Temperaturen so gewählt sind, dass die Temperatur der Dispersion unter dem Schmelzpunkt des ersten Hardstockfetts ist.

5. Verfahren nach Anspruch 1, wobei die Dispersion von Schritt a. durch Bereitstellen eines Gemisches des ersten Hardstockfetts und des essbaren Öls bei einer Temperatur erhalten wird, sodass dieses vollständige Gemisch flüssig ist, gefolgt von Abkühlen dieses Gemisches auf eine Temperatur zwischen 0 und 25°C, wobei ein solches Abkühlen vorzugsweise in einem Kratzwärmetauscher erfolgt.

6. Verfahren nach einem der vorstehenden Ansprüche, wobei nach Zugabe des zweiten Hardstockfetts von Schritt d. das so erhaltene Gemisch derart Scherung unterzogen wird, dass die Temperatur des Gemisches, das aus dieser Schervorrichtung austritt, unter 35°C ist.

7. Verfahren nach einem der Ansprüche 1 bis 5, wobei das erste und zweite Hardstockfett dieselbe Zusammensetzung aufweisen.

8. Verfahren nach einem der Ansprüche 1 bis 5, wobei das erste und zweite Hardstockfett unterschiedliche Zusammensetzung aufweisen

9. Verfahren nach einem der vorstehenden Ansprüche, wobei das zweite Hardstockfett 10 bis 100 Gewichtsprozent des zweiten Hardstocks von Sterolen, Stanolen oder Estern von Sterolen und Stanolen umfasst.

10. Verfahren nach einem der vorstehenden Ansprüche, wobei das erste Hardstockfett und das zweite Hardstockfett mindestens 50% Feststoffe bei 20°C und mindestens 25% Feststoffe bei 30°C aufweisen.

11. Verfahren nach einem der vorstehenden Ansprüche, wobei die Emulsion 20-55 Gewichtsprozent der gesamten Emulsion einer wässrigen Phase und 45-80 Gewichtsprozent der gesamten Emulsion einer Fettphase umfasst.

12. Verfahren nach einem der vorstehenden Ansprüche, wobei die Dispersion, zubereitet in a. und vor dem Mischschritt c., eine Menge an Feststoffen zwischen 1 und 25% aufweist.

13. Verfahren nach einem der vorstehenden Ansprüche, wobei der Mischschritt c durch eine Schervorrichtung ausgeführt wird, die eine Emulsion mit einer Wassertröpfchengröße $D_{3.3}$ zwischen 1 und 20 Mikrometer, vorzugsweise zwischen 2 und 15 Mikrometer, bevorzugter zwischen 2 und 10 Mikrometer erzeugt und wobei die Temperatur der Emulsion nach dem Mischritt unter 28°C ist.

**Revendications**

1. Procédé de production d'une émulsion à phase huileuse continue comestible, laquelle émulsion comprend 15 à 65% en poids de l'émulsion totale d'une phase aqueuse et 35 à 85% en poids de l'émulsion totale d'une phase huileuse, ladite phase huileuse comprenant une première matière grasse solide, une seconde matière grasse solide et une huile comestible, ledit procédé comprenant les étapes de :

   a) préparer une dispersion comprenant de l'huile comestible et des cristaux de matière grasse, en mélangeant 65% à 98% en poids sur la dispersion d'huile comestible avec 2 à 35% en poids sur la dispersion de la première matière grasse solide, dans lequel les cristaux de matière grasse dans la dispersion ont une épaisseur moyenne de cristal inférieure à 50 nm à une température comprise entre 15° et 20°C telle que mesurée avec une diffusion des rayons X aux petits angles ;
   b) fournir une phase aqueuse à une température de 0 à 25°C;
   c) mélanger la dispersion préparée à l'étape a. avec la phase aqueuse préparée à l'étape b. pour former une émulsion ;
   d) mélanger l'émulsion préparée à l'étape c. avec 1 à 35% en poids sur la base de la phase huileuse totale de ladite seconde matière grasse solide, laquelle seconde matière grasse solide est liquide et à une température comprise entre 30 et 80°C.

2. Procédé selon la revendication 1, dans lequel la dispersion de l'étape a. est obtenue en mélangeant des particules cristallisées de la première matière grasse solide avec l'huile comestible, laquelle huile comestible est à une température inférieure à 30°C.

3. Procédé selon la revendication 2, dans lequel les particules cristallisées de la première matière grasse solide sont des particules de graisse micronisées préparées par micronisation supercritique à l'état fondu de la première matière grasse solide.

4. Procédé selon la revendication 1, dans lequel la dispersion de l'étape a. est obtenu en mélangeant la première matière grasse solide qui est fondue et à une température comprise entre 30°C et 80°C avec l'huile comestible à une température comprise entre -10 et 25°C sous cisaillement, dans lequel les quantités et les températures sont choisies telles que la température de la dispersion est inférieure au point de fusion de la première matière grasse solide.

5. Procédé selon la revendication 1, dans lequel la dispersion de l'étape a. est obtenue en fournissant un mélange de la première matière grasse solide et de l'huile comestible à une température telle que ce mélange complet soit liquide, suivi d'un refroidissement de ce mélange à une température comprise entre 0 et 25°C, de préférence qu'un tel refroidissement se fait dans un échangeur de chaleur à surface raclée.

6. Procédé selon l'une quelconque des revendications précédentes, dans lequel après l'addition de la seconde matière grasse solide de l'étape d. le mélange ainsi obtenu est soumis à un cisaillement de telle sorte que la température du mélange sortant de ce dispositif de cisaillement soit inférieure à 35°C.

7. Procédé selon l'une quelconque des revendications 1 à 5, dans lequel la première et la seconde matières grasses solides sont de la même composition.

8. Procédé selon l'une quelconque des revendications 1 à 5, dans lequel la première et la seconde matières grasses solides sont de composition différente.

9. Procédé selon l'une quelconque des revendications précédentes, dans lequel la seconde matière solide comprend 10 à 100% en poids sur la seconde matière solide de stérols, stanols ou esters de stérols ou stanols.

10. Procédé selon l'une quelconque des revendications précédentes, dans lequel la première matière grasse solide et la seconde matière grasse solide ont au moins 50% de solides à 20°C et au moins 25% de solides à 30°C.

**11.** Procédé selon l'une quelconque des les revendications précédentes, dans lesquelles l'émulsion comprend 20 à 55% en poids de l'émulsion totale d'une phase aqueuse et 45 à 80% en poids de l'émulsion totale d'une phase huileuse.

**12.** Procédé selon l'une quelconque des revendications précédentes, dans lequel la dispersion préparée à l'étape a. et avant l'étape de mélange c. a une teneur en solides comprise entre 1 et 25%.

**13.** Procédé selon l'une quelconque des revendications précédentes, dans lequel l'étape de mélange c. est effectuée par un dispositif de cisaillement qui produit une émulsion avec une gouttelette d'eau $D_{3.3}$ comprise entre 1 et 20 microns, de préférence entre 2 et 15 microns, plus préférentiellement entre 2 et 10 microns, et dans lequel la température de l'émulsion après ladite étape de mélange est en dessous de 28°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013171027 A
- WO 2014044582 A
- WO 2005014158 A
- GB 1327511 A
- WO 0238263 A

### Non-patent literature cited in the description

- Ullmans Encyclopedia. vol. A 16, 156-158
- *Fette, Seifen Anstrichmittel,* 1978, vol. 80, 180-186
- Particle formation of ductile materials using the PGSS technology with supercritical carbon dioxide. **P.MÜNÜKLÜ.** Ph.D.Thesis. Delft University of Technology, 16 December 2005, 41-51
- **N.C. ACEVEDO ; A.G. MARANGONI.** *Nanostructured Fat Crystal systems, Review of Food science and Technology,* November 2014, vol. 6 (1
- **P.MÜNÜKLÜ.** Ph.D.Thesis. Delft University of Technology, 16 December 2005, 41-51